# EUROPÄISCHE PATENTSCHRIFT

(11) **EP 1 620 291 B1**
(45) Veröffentlichungstag und Bekanntmachung des Hinweises auf die Patenterteilung: **27.06.2007**
(21) Anmeldenummer: 04728324.7
(22) Anmeldetag: 20.04.2004
(51) Int. Cl.: B60R 21/13

(54) **ÜBERROLLSCHUTZ-VORRICHTUNG FÜR EIN KRAFTFAHRZEUG**
ROLL-OVER PROTECTION DEVICE FOR A MOTOR VEHICLE
STRUCTURE DE PROTECTION POUR VEHICULE AUTOMOBILE

(30) Priorität: 24.04.2003 DE 10318594
(43) Veröffentlichungstag der Anmeldung: 01.02.2006
(73) Patentinhaber: Wilhelm Karmann GmbH, 49084 Osnabrück (DE)
(72) Erfinder: BUNSMANN, Winfried, 49143 Bissendorf (DE); BROCKHOFF, Franz, Ulrich, 49565 Bramsche (DE); HOGE, Stefan, 49143 Bissendorf (DE)
(86) Internationale Anmeldenummer: PCT/DE2004/000818
(87) Internationale Veröffentlichungsnummer: WO 2004/094197

(56) Entgegenhaltungen:
- EP-A- 1 186 481
- DE-A- 19 540 819
- DE-A- 19 922 674
- US-A- 5 671 947

## Beschreibung

Die Erfindung betrifft eine Überrollschutz-Vorrichtung für ein Kraftfahrzeug, insbesondere für ein Cabriolet, nach der im Oberbegriff des Patentanspruches 1 näher definierten Art.

Bei Überrollschutz-Vorrichtungen für ein Kraftfahrzeug, welche einen Überrollbügel aufweisen, der wenigstens annähernd U-förmig ausgebildet ist und im Crash-Fall in eine obere Stützlage ausgefahren wird, ist häufig ein sogenannter Schubladeneffekt zu beobachten, worunter ein Verkanten oder gar Verklemmen des Überrollbügels bei dessen Aktivierung aufgrund von Fertigungstoleranzen oder mangelnder Synchronisation der an den Bügelschenkeln angreifenden Antriebe verstanden wird. Ein solcher Schubladeneffekt bedeutet bei einer Verunfallung des Kraftfahrzeugs eine nicht hinnehmbare Gefährdung der Fahrzeuginsassen.

In der DE 195 40 819 C2 ist eine Überrollschutz-Vorrichtung für ein Kraftfahrzeug der eingangs erwähnten Art beschrieben. Diese weist einen sich im wesentlichen über die gesamte Fahrzeugbreite erstreckenden, im Crash-Fall ausfahr- oder ausschwenkbaren Überrollbügel auf, wobei zwei parallel verlaufende, mit Federkraft beaufschlagte Bügelschenkel jeweils an einer Fahrzeugseite angeordnet sind und über eine quer zum Fahrzeug verlaufende, durchgehende Bügelschale miteinander verbunden sind. Um eine nicht synchronisierte Ausfahr- bzw. Ausschwenkbewegung der Bügelschenkel auszugleichen, wird eine gelenkige Lagerung der die beiden Bügelschenkel verbindenden Bügelschale vorgeschlagen.

Die DE 197 12 955 A1 offenbart ebenfalls ein Überrollschutzsystem für Cabriolets, das einen im wesentlichen über die gesamte Fahrzeugbreite reichenden, U-förmigen Überrollbügel umfaßt, dessen nach unten gerichtete Schenkel in aufbaufesten Führungskassetten durch jeweils einen Federtrieb aus einer abgesenkten Ruhelage in eine über die Brüstungshöhe nach oben überstehende Stützlage verlagerbar sind. Zur Vermeidung des Schubladeneffekts wird auch hier vorgeschlagen, den Überrollbügel aus mehreren Teilen zusammenzusetzen, wobei im Verbindungsbereich zwischen einem Querjoch und den seitlichen Schenkeln soviel Beweglichkeit vorgesehen ist, daß ein Verkanten des Bügels beim Ausfahren vermeidbar ist.

Diesen bekannten Lösungen ist die Abkehr vom Prinzip des einstückigen Überrollbügels zugunsten eines mehrteiligen Bauelementes mit erheblichen Toleranzen zwischen den einzelnen Teilen des Bauelementes gemeinsam. Diese Maßnahme zur Vermeidung des Schubladeneffekts bedeutet jedoch eine Inkaufnahme von Instabilitäten, welche nur mit aufwendigen Stabilisierungsmaßnähmen und mit zusätzlichen mechanischen Bauteilen zu kompensieren sind.

Die vorbeschriebenen Überrollschutzsysteme wie auch aus der Praxis bekannte Überrollschutz-Vorrichtungen weisen zudem den Nachteil auf, daß die Durchlademöglichkeit zwischen an die Überrollschutz-Vorrichtung angrenzenden Fahrzeugräumen aufgrund der beiderseitigen Antriebe des Überrollbügels und dessen Führungseinrichtungen häufig nur sehr begrenzt ist.

In der DE 199 22 674 A1 ist ein Überrollbügel gezeigt, der eine Durchlademöglichkeit bietet und bei dessen Aktivierung von einem pyrotechnischen Aktuator entzündetes Gas auf die Unterseite der Schenkel bzw. Kolben des Überrollbügels trifft, wobei an jedem Schenkel ein Rastelement zur Freigabe des Schenkels betätigt wird. Bereits ein geringer zeitlicher Unterschied bei der Freigabe der Schenkel durch das zugeordnete Rastelement führt hier zu einem Verkanten des Überrollbügels bei der Verlagerungsbewegung. Eine Synchronisierung der Verlagerungsbewegung ist hier nicht vorgesehen.

Ein Überrollschutzsystem mit einer zentralen Halte- und Auslöseeinrichtung für einen Überrollkörper, welche einer zeitversetzten Freigabe der Schenkel des Überrollkörpers bei dessen Aktivierung entgegenwirkt, ist für einen die Fahrzeugbreite überspannenden Überrollbügel aus der DE 100 44 930 C1, die dem Oberbegriff des Anspruchs 1 entspricht, bekannt.

Ein Schubladeneffekt infolge eines leichten Verkantens während der Verlagerung des Überrollkörpers zwischen seinen Endpositionen ist dabei jedoch immer noch möglich.

Aus der DE 195 40 819 A1 ist ein Überrollbügel mit einer beide Schenkel verbindenden Verriegelungsstange bekannt. Bei deren Entriegelung ist jedoch ein zeitlicher Versatz der Auslösung der Schenkel und damit ein unsynchroner Lauf mit der Gefahr eines Verkantens des Überrollbügels unvermeidbar.

Die WO 2004/005083 A1 beschreibt ein Überrollschutzsystem für Kraftfahrzeuge, bei dem eine Koppelwelle einen Überrollbügel gegen die Kraft vorgespannter Antriebs-Druckfedern in einer unteren, eingefahrenen Ruhelage hält und den Überrollbügel im Überschlagsfall freigibt. Zum Halten des Überrollbügels in Ruhelage weist die Koppelwelle symmetrisch angeordnete Halteklauen auf, welche über Federn vorgespannt sind. Durch diese Anordnung wirkt die Vorspannkraft der Druckfedern gleichmäßig auf die Wirkverbindung der Klauen mit der Quertraverse des Überrollbügels und ermöglicht somit eine synchrone Lösung der Wirkverbindung. Auf die Verlagerungsbewegung der Schenkel des Überrollbügels hat diese Anordnung mit der Koppelwelle jedoch nach Lösung der Klauen keinen Einfluss.

Es ist Aufgabe der vorliegenden Erfindung, eine Überrollschutz-Vorrichtung für ein Kraftfahrzeug, insbesondere für ein Cabriolet, der eingangs genannten Art zu schaffen, die sich durch eine einfache konstruktive Ausgestaltung, eine hohe Funktionssicherheit, insbesondere durch Vermeidung eines Schubladeneffektes bei ihrer Aktivierung, und große Stabilität im Crash-Fall auszeichnet.

Diese Aufgabe wird mit einer Überrollschutz-Vorrichtung für ein Kraftfahrzeug gemäß den Merkmalen des Patentanspruches 1 gelöst.

Die erfindungsgemäße Überrollschutz-Vorrichtung bietet insbesondere für Insassen eines Cabriolet mit einem Soft- oder Hardtopverdeck im Fall eines Fahrzeugüberschlages dadurch einen zuverlässigen Schutz, daß neben einer zentralen Halte- und Auslöseeinrichtung, welche eine zeitversetzte Freigabe der Schenkel des Überrollbügels bei dessen Aktivierung verhindert, zusätzlich eine mit beiden Schenkeln während deren Verlagerungsbewegung verbundene und somit die Bewegung der Schenkel entlang der Führungseinrichtungen synchronisierende Synchronisationseinrichtung vorgesehen ist, womit ein Verkanten oder Verklemmen infolge eines unterschiedlichen Antriebs der Schenkel bei einem Ausfahren des Überrollbügels und somit der sogenannte Schubladeneffekt vermieden wird.

Im Vergleich zu Lösungen, bei denen jeweils eine Halte- und Auslöseeinrichtung mit einem der Schenkel im Bereich von dessen Führungseinrichtungen zusammenwirkt, kann der Bereich der Führungseinrichtungen der Schenkel bei einer Ausgestaltung mit einer zentralen Halte- und Auslöseeinrichtung für den Überrollbügel schlanker ausgeführt werden. Damit wird eine breitere Durchladeöffnung und - beispielsweise bei Umklappen angrenzender Sitzlehnen - eine entsprechende Vergrößerung und bessere Nutzbarkeit eines Kofferraumvolumens erzielt.

Die Überrollschutz-Vorrichtung gemäß der Erfindung ist mechanisch besonders robust und im Crash-Fall sehr hoch belastbar, wenn das Querjoch und die Schenkel des Überrollbügels einstückig ausgeführt sind.

Der Antrieb zur Überführung des Überrollbügels von der Ruhelage in die obere Stützlage kann ein Federantrieb mit jeweils wenigstens einer auf einen Schenkel des Überrollbügels wirkenden, in dessen Ruhelage komprimierten Druckfeder sein, wie es aus der Praxis bekannt und beispielsweise auch in der DE 197 12 955 A1 beschrieben ist.

Alternativ hierzu kann bei einer besonders vorteilhaften Ausgestaltung der Überrollschutz-Vorrichtung mit einer Synchronisationswelle als synchronisierende Einrichtung, welche parallel zu dem Querjoch ortsfest gelagert ist und mit den Schenkeln jeweils über ein Zahnprofil, welches in eine an dem zugeordneten Schenkel ausgebildeten Zahnleiste eingreift, verbunden ist, der Antrieb zur Überführung des Überrollbügels von der Ruhelage in die obere Stützlage mit einem an der Synchronisationsstange angreifenden Antriebselement ausgebildet sein.

Auf diese Weise werden nicht nur Bauelemente eingespart, da statt eines separaten Antriebs für jeden der Schenkel nurmehr ein Antriebselement benötigt wird, sondern es wird zusätzlich die Gefahr eines unterschiedlich starken bzw. zeitversetzten Antriebs der Schenkel, welcher durch die Synchronisationsstange ausgeglichen werden muß, beseitigt. Darüber hinaus wird eine weitere Verschlankung der Überrollschutz-Vorrichtung im Bereich der Führungseinrichtungen der Schenkel erzielt, wodurch mehr Raum für die Durchladeöffnung zur Verfügung steht.

Weitere Vorteile und vorteilhafte Ausgestaltungen einer Überrollschutz-Vorrichtung gemäß der Erfindung sind der Beschreibung, der Zeichnung und den Patentansprüchen entnehmbar. Zwei Ausführungsbeispiele einer erfindungsgemäß ausgestalteten Überrollschutz-Vorrichtung sind in der Zeichnung schematisch vereinfacht dargestellt und werden nachfolgend näher erläutert.

Es zeigt:
- Fig. 1: eine vereinfachte perspektivische Ansicht einer ersten Ausführung einer Überrollschutz-Vorrichtung für ein Cabriolet in Alleinstellung;
- Fig. 2: eine zweite Ausführung einer Überrollschutz-Vorrichtung für ein Cabriolet in einer teilweisen perspektivischen Darstellung;
- Fig. 3: eine perspektivische Ansicht einer Einbausituation für die in Fig. 2 dargestellte Überrollschutz-Vorrichtung;
- Fig. 4: eine perspektivische Darstellung der Überrollschutz-Vorrichtung gemäß Fig. 2 in einem in die Einbausituation gemäß Fig. 3 eingebauten Zustand in Fahrzeugfrontrichtung betrachtet; und
- Fig. 5: eine ausschnittsweise perspektivische Ansicht der Überrollschutz-Vorrichtung gemäß Fig. 4 in Fahrzeugheckrichtung betrachtet.

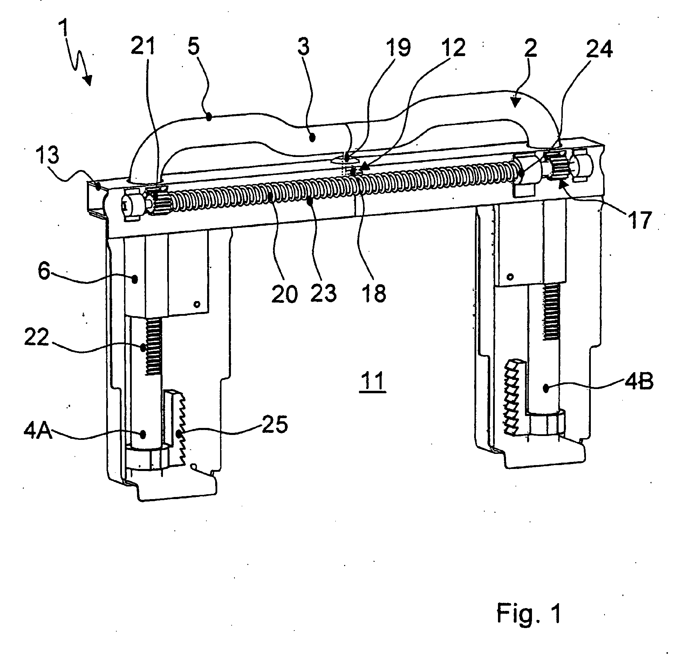

In den Fig. 1 bis Fig. 5 ist jeweils eine Überrollschutz-Vorrichtung 1 bzw. 1' für ein nicht detaillierter dargestelltes Cabriolet-Kraftfahrzeug gezeigt, wobei funktionsgleiche Bauelemente teilweise mit gleichen Bezugszeichen versehen sind.

Die Überrollschutz-Vorrichtung 1 bzw. 1' weist jeweils einen Überrollbügel 2 auf, welcher im wesentlichen die gesamte Fahrzeugbreite überspannt und annähernd U-förmig mit einem Querjoch 3 und seitlichen Schenkeln 4A, 4B einstückig ausgebildet ist. Bei dem in Fig. 1 dargestellten Ausführungsbeispiel weist der Überrollbügel 2 zudem eine Kontur 5 auf, welche annähernd die Form angrenzender Kopfstützen nachzeichnet, womit sich der Überrollbügel 2 in abgesenkter Ruhelage harmonisch in eine Rückenlehnen- und Kopfstützen-Verkleidung integrieren läßt.

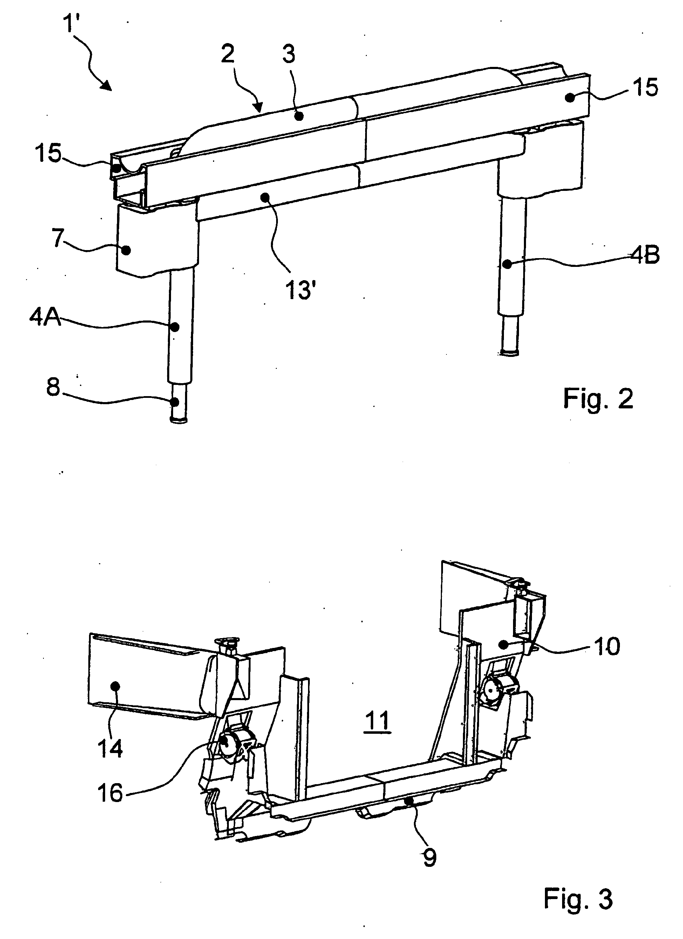

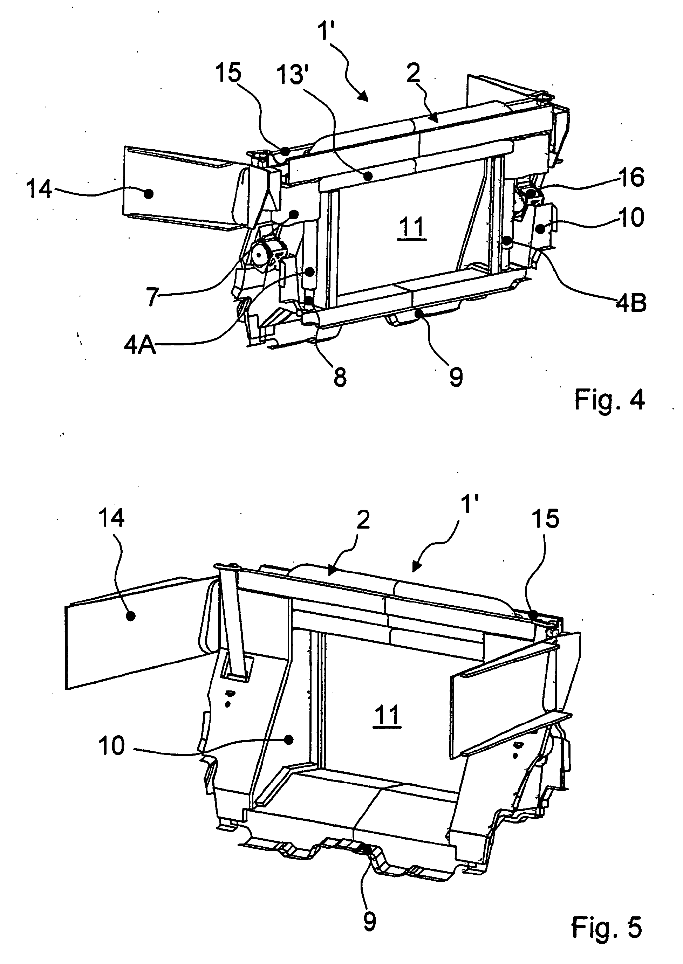

Die Schenkel 4A, 4B des Überrollbügels 2 sind jeweils in diesen zugeordneten Führungseinrichtungen 6, 7, 8 angeordnet und entlang diesen longitudinal verschiebbar. Bei beiden Ausführungsbeispielen bilden an einer z. B. in Fig. 3 näher ersichtlichen Fahrzeugbodenstruktur 9 fest angeordnete Standrohre 8, welche zum Beispiel in Fig. 4 ersichtlich sind, innere Führungseinrichtungen für die darüber geführten rohrförmigen Schenkel 4A, 4B. Des weiteren sind die Schenkel 4A, 4B jeweils durch eine sie umgebende, als Führungskassette 6 bzw. 7 ausgebildete Führungseinrichtung geführt, welche sich in abgesenkter Ruhelage des Überrollbügels 2 vorzugsweise von einem mittleren Abschnitt bis zu einem an das Querjoch 3 grenzenden Abschnitt der Schenkel 4A, 4B erstreckt. Die Führungskassetten 6 bzw. 7 sind ebenfalls ortsfest, wobei sie bei den gezeigten Ausführungen jeweils an einer Rückenlehnenstruktur 10 des Fahrzeugrohbaus befestigt sind.

Die Rückenlehnenstruktur 10 weist eine Durchladeöffnung 11, welche im eingebauten Zustand der erfindungsgemäßen Überrollschutz-Vorrichtung 1 bzw. 1' freigehalten wird, sowie seitlich davon angeordnete Sicherheitsgurte 16 auf.

Zum Aktivieren des Überrollbügels 2 bei einer Verunfallung des Fahrzeugs bzw. einer von einer geeigneten Sensorik erkannten Crash-Situation ist eine zentrale Halte- und Auslöseeinrichtung 12 vorgesehen, welche an einer Querverstrebung 13 bzw. 13' angeordnet ist, welche sich parallel zu dem Querjoch 3 des Überrollbügels 2 in Einbaulage oberhalb der Durchladeöffnung 11 erstreckt und bei den gezeigten Ausführungen mit ihren Enden jeweils an den Führungskassetten 6 bzw. 7 für die Schenkel 4A, 4B befestigt ist.

Der Überrollbügel 2, die seitlichen Führungskassetten 6 bzw. 7, welche wie bei den in Fig. 1 gezeigten Führungskassetten 6 eine Einheit mit einem versteifenden Schalenkörper bilden können, und die -Querverstrebung 13 bzw. 13' bilden ein in sich stabiles System, welches als Modul vormontierbar und komplett in die Rückenlehnstruktur 10 des Fahrzeugaufbaus, wie sie beispielsweise in Fig. 3 gezeigt ist, einbaubar ist.

Während die Querverstrebung 13 bei der Ausführung gemäß Fig. 1 gleichzeitig die Funktion eines die Fahrzeugbreite im Bereich einer B-Säule versteifenden Torsionsprofils des Fahrzeugrohbaus hat und zur Gewährleistung der Torsionsfestigkeit des Fahrzeugs entsprechend stark ausgelegt ist, ist die Querverstrebung 13' der in den Fig. 2 bis Fig. 5 gezeigten Ausführung lediglich ein Funktionselement der erfindungsgemäßen Überrollschutz-Vorrichtung 1' tragendes Verbindungsprofil zwischen den seitlichen Führungskassetten 7. Zur Vermeidung von Verspannungen wird die Querverstrebung 13' in die in Fig. 3 gezeigte Einbausituation des Fahrzeugrohbaus mit einer definierten, beispielsweise durch Gummielemente realisierten Einbautoleranz eingebaut.

Zur Übertragung von auf den Fahrzeugrohbau einwirkenden Torsionskräften ist bei der Ausführung nach Fig. 2 bis Fig. 5 eine die seitlichen Fahrzeugrohbaustrukturen 14 verbindendes zusätzliches Torsionsprofil 15 vorgesehen, welches ein Teil des vormontierbaren, die Querverstrebung 13', die mit dieser verbundenen Führungskassetten 7 und den Überrollbügel 2 umfassenden Moduls ist. Zur Vormontage wird der Überrollbügel 2 durch den Schenkeln 4A, 4B Spiel gebende Ausnehmungen in dem Torsionsprofil 15 gesteckt, bevor die Schenkel 4A, 4B durch entsprechende Öffnungen der Führungskassetten 7 gesteckt werden. Wie Fig. 2 weiter zu entnehmen ist, können zudem die Standrohre 8 in die rohrförmigen Schenkel 4A, 4B während der Vormontage eingeführt werden, so daß diese Bestandteil des vormontierten Moduls sind.

Im eingebauten, in die Rückenlehnenstruktur 10 integrierten Zustand, welchen die Fig. 4 und Fig. 5 zeigen, sind die Querverstrebungen 13' und die Standrohre 8 auf bekannte Weise fest mit den Fahrzeugrohbau verbunden, wobei die Überrollschutz-Vorrichtung 1' in sich steif ist und das Torsionsprofil 15 die Torsionsfestigkeit des Fahrzeugs gewährleistet.

Bei den gezeigten Ausführungen trägt die Querverstrebung 13 bzw. 13' nicht nur die in Fig. 1 schematisch dargestellte Halte- und Auslöseeinrichtung 12, sondern zudem auch eine synchronisierende Einrichtung 17, welche die Verlagerung der Schenkel 4A, 4B entlang deren Führungseinrichtungen 6, 7, 8 bei einem Ausfahren des Überrollbügels 2 synchronisiert.

Die zentrale Halte- und Auslöseeinrichtung 12 ist fahrzeugbreitenmittig an der Querverstrebung 13 bzw. 13' gelagert und weist einen vorliegend als Elektromagneten ausgeführten, mit einer Pre-Crash-Sensorik zusammenwirkenden Aktuator 18 auf, welcher ein Greifelement ansteuert, das in Ruhelage mit dem Überrollbügel 2 bzw. einer an dem Überrollbügel 2 fest angeordneten Haltelasche 19 in Eingriff steht. Bei dem Greifelement kann es sich beispielsweise um eine in eine Rasterung oder eine Ausnehmung eingreifende Wippe herkömmlicher Bauart handeln, welche in bekannter Art und Weise angesteuert wird. Der Fachmann kann für die Halte- und Auslöseeinrichtung in Abhängigkeit der im Einzelfall vorliegenden Anforderungen aber auch jegliche andere bekannte Ausgestaltung wählen. Im einfachsten Fall kann das Greifelement einen Haken darstellen, welcher in Ruhelage in ein Loch an der als Materialfahne ausgebildeten Haltelasche 19 eingreift.

Die synchronisierende Einrichtung 17 ist bei den dargestellten Ausführungen mit einer Synchronisationswelle 20 ausgebildet, welche parallel zu dem Querjoch 3 ortsfest an der Querverstrebung 13 bzw. 13' gelagert ist und mit den Schenkeln 4A, 4B jeweils über ein Zahnprofil 21, welches in eine an dem zugeordneten Schenkel 4A bzw. 4B ausgebildete Zahnleiste 22 eingreift, verbunden ist. Auf diese Weise wird eine synchrone Bewegung der Schenkel 4A und 4B bei einem Ausfahren des Überrollbügels 2 sichergestellt.

Die Synchronisationswelle 20 dient bei den gezeigten Ausführungsvarianten zusätzlich als Teil eines Antriebs zur Überführung des Überrollbügels 2 von der Ruhelage in dessen obere Stützlage, wobei als Antriebselement vorliegend eine die Synchronisationswelle 20 umgebende Spiralfeder 23 vorgesehen ist, welche in Ruhelage des Überrollbügels 2 verdreht zwischen der Synchronisationswelle 20 und einem ortsfesten Punkt, welcher ein Lager 24 der Synchronisationswelle 20 darstellt, verdreht vorgespannt ist.

Wenn der Überrollbügel 2 von der Halte- und Auslöseeinrichtung 12 losgelassen wird, entspannt sich die Feder 23 und versetzt dabei die Synchronisationswelle 20 in Rotation. Infolge des Eingriffs der Zahnprofile 21 der Synchronisationswelle 20 in die Zahnleisten 22 an den jeweiligen Schenkeln 4A, 4B wird der Überrollbügel 2 durch die Rotation der Synchronisationswelle 20 in seine obere Stützlage verschoben. In dieser oberen Stützlage wird der Überrollbügel durch beidseits an den Schenkeln 4A und 4B befestigte Sperrklinken 25, welche in ein entsprechendes in der Führungskassette 6 bzw. 7 angeordnetes Gegenstück einrasten, arretiert.

Indem die Synchronisationswelle 20 für den Überrollbügel 2 zugleich als Teil des Antriebs dient, wird ein Antrieb geschaffen, welcher konstruktiv sehr einfach und robust ist sowie separate Antriebe an den einzelnen Schenkeln 4A, 4B erübrigt. Zudem wird der Bauraumbedarf und das Gewicht der Überrollschutzvorrichtung 1 bzw. 1' weiter reduziert.

In alternativen Ausführungen kann es selbstverständlich auch vorgesehen sein, daß ein anderes Antriebselement an der Synchronisationswelle angreift. So ist es beispielsweise denkbar, die Synchronisationswelle elektromotorisch anzutreiben.

### Bezugszeichen

- 1, 1': Überrollschutz-Vorrichtung
- 2: Überrollbügel
- 3: Querjoch
- 4A, 4B: Schenkel
- 5: Kontur des Überrollbügels
- 6: Führungseinrichtung, Führungskassette
- 7: Führungseinrichtung, Führungskassette
- 8: Führungseinrichtung, Standrohr
- 9: Fahrzeugbodenstruktur
- 10: Rücklehnenstruktur
- 11: Durchladeöffnung
- 12: Halte- und Auslöseeinrichtung
- 13, 13': Querverstrebung
- 14: Fahrzeugrohbaustruktur
- 15: Torsionsprofil
- 16: Sicherheitsgurt
- 17: Synchronisierende Einrichtung
- 18: Aktuator
- 19: Haltelasche
- 20: Synchronisationswelle
- 21: Zahnprofil
- 22: Zahnleiste
- 23: Antriebselement, Feder
- 24: ortsfester Punkt, Lager
- 25: Sperrklinke

## Patentansprüche

1. Überrollschutz-Vorrichtung für ein Kraftfahrzeug, insbesondere für ein Cabriolet, mit einem Überrollbügel (2), welcher wenigstens annähernd U-förmig mit einem Querjoch (3) und seitlichen Schenkeln (4A, 4B), eine Durchladeöffnung (11) freigebend und im wesentlichen die Fahrzeugbreite überspannend ausgebildet ist, wobei die seitlichen Schenkel (4A, 4B) zur Überführung des Überrollbügels (2) aus einer abgesenkten Ruhelage in eine obere Stützlage entlang ortsfester Führungseinrichtungen (6, 7, 8) verlagerbar sind, und mit einer zentralen, durch einen Aktuator (18) angesteuerten Halte- und Auslöseeinrichtung (12) für den Überrollbügel (2),
**dadurch gekennzeichnet,**
**daß** eine mit beiden Schenkeln (4A, 4B) des Überrollbügels (2) während deren Verlagerungsbewegung verbundene, die Verlagerungsbewegung der Schenkel (4A, 4B) entlang der Führungseinrichtungen (6, 7, 8) synchronisierende Einrichtung (17) vorgesehen ist.

2. Vorrichtung nach Anspruch 1,
**dadurch gekennzeichnet,**
**daß** das Querjoch (3) und die Schenkel (4A, 4B) des Überrollbügels (2) einstückig ausgeführt sind.

3. Vorrichtung nach Anspruch 1 oder 2,
**dadurch gekennzeichnet,**
**daß** die synchronisierende Einrichtung (17) mit einer Synchronisationswelle (20) ausgebildet ist, welche parallel zu dem Querjoch (3) ortsfest gelagert ist und mit den Schenkeln (4A, 4B) jeweils über ein Zahnprofil (21), welches in eine an dem zugeordneten Schenkel (4A, 4B) ausgebildete Zahnleiste (22) eingreift, verbunden ist.

4. Vorrichtung nach einem der Ansprüche 1 bis 3,
**dadurch gekennzeichnet,**
**daß** die zentrale Halte- und Auslöseeinrichtung (12) in einer Querverstrebung (13, 13') angeordnet ist, welche sich im wesentlichen parallel zu dem Querjoch (3) des Überrollbügels (2) in Einbaulage oberhalb der Durchladeöffnung (11) erstreckt.

5. Vorrichtung nach einem der Ansprüche 1 bis 4,
**dadurch gekennzeichnet,**
**daß** die zentrale Halte- und Auslöseeinrichtung (12) eine an dem Überrollbügel (2) in einem wenigstens annähernd fahrzeugbreitenmittigen Bereich angeordnete Haltelasche (19) umfaßt, welche in Ruhelage des Überrollbügels (2) mit einem ortsfest gelagerten Greifelement in Eingriff steht.

6. Vorrichtung nach Anspruch 5,
**dadurch gekennzeichnet,**
**daß** die zentrale Halte- und Auslöseeinrichtung (12) ein an der Querverstrebung (13, 13') ortsfest gelagertes Greifelement umfaßt, welches von dem Aktuator (18) angesteuert ist und in Ruhelage des Überrollbügels (2) mit letzterem in Eingriff steht.

7. Vorrichtung nach einem der Ansprüche 1 bis 6,
**dadurch gekennzeichnet,**
**daß** als Antrieb zur Überführung des Überrollbügels von der Ruhelage in die obere Stützlage ein Federantrieb mit jeweils wenigstens einer auf einen Schenkel des Überrollbügels wirkenden, in dessen Ruhelage komprimierten Druckfeder vorgesehen ist.

8. Vorrichtung nach einem der Ansprüche 3 bis 6,
**dadurch gekennzeichnet,**
**daß** als Antrieb zur Überführung des Überrollbügels (2) von der Ruhelage in die obere Stützlage ein an der Synchronisationswelle (20) angreifendes Antriebselement (23) vorgesehen ist.

9. Vorrichtung nach Anspruch 8,
**dadurch gekennzeichnet,**
**daß** das Antriebselement eine Feder (23) ist, welche in Ruhelage des Überrollbügels (2) verdreht zwischen der Synchronisationswelle (20) und einem ortsfesten Punkt (24) vorgespannt ist und bei einem Lösen des Überrollbügels (2) die Synchronisationswelle (20) in Rotation versetzt.

10. Vorrichtung nach einem der Ansprüche 4 bis 9,
**dadurch gekennzeichnet,**
**daß** die Querverstrebung (13, 13') zwischen ortsfest gehalterten Führungseinrichtungen (6; 7) der Schenkel (4A, 4B) des Überrollbügels (2) angeordnet ist.

11. Vorrichtung nach einem der Ansprüche 4 bis 10,
**dadurch gekennzeichnet,**
**daß** die Querverstrebung (13, 13'), die mit ihr verbundenen Führungseinrichtungen (6, 7, 8) und der Überrollbügel (2) ein vormontierbares Modul darstellen.

12. Vorrichtung nach Anspruch 11,
**dadurch gekennzeichnet,**
**daß** das vormontierbare Modul ein in Einbaulage oberhalb der Durchladeöffnung (11) in Fahrzeugquerrichtung verlaufendes, mit dem Fahrzeugaufbau fest zu verbindendes Torsionsprofil (15) umfaßt, durch das der Überrollbügel (2) im vormontierten Zustand gesteckt ist.

## Claims

1. Roll-over protection device for a motor vehicle, particularly for a convertible, said device comprising a roll bar (2) that is provided with an at least nearly U-shaped design having a transverse yoke (3) and lateral limbs (4A, 4B) while leaving a loading opening (11) unobstructed and extending such that it essentially spans the width of the vehicle, with the lateral limbs (4A, 4B) being displaceable along fixed guiding devices (6, 7, 8) in order to transfer the roll bar (2) out of a lowered non-operational position into a raised supporting position, and said device further comprising a central retaining and activating device (12) for the roll bar (2), said central retaining and activating device (12) being controlled by an actuator (18),
**characterized in that**
a device (17) connected to both limbs (4A, 4B) of the roll bar (2) during their displacement is provided to synchronize the displacement of the limbs (4A, 4B) along the guiding devices (6, 7, 8).

2. Device according to claim 1, **characterized in that** the transverse yoke (3) and the limbs (4A, 4B) of the roll bar (2) are designed as a single piece.

3. Device according to claim 1 or 2, **characterized in that** the synchronizing device (17) is provided with a synchronization shaft (20) that is mounted fixedly parallelly to the transverse yoke (3) and is connected to each of the limbs (4A, 4B) by means of a tooth profile (21) that meshes with a notched strip (22) that is arranged on the assigned limb (4A, 4B).

4. Device according to any one of claims 1 to 3, **characterized in that** the central retaining and release device (12) is arranged in a cross bar (13, 13') that stretches essentially parallelly to the transverse yoke (3) of the roll bar (2) in the installation position above the loading opening (11).

5. Device according to any one of claims 1 to 4, **characterized in that** the central retaining and activating device (12) comprises a retaining plate (19) that is arranged on the roll bar (2) in an area which is at least nearly the center of the width of the vehicle and is in mesh with a fixedly mounted engaging element in the non-operational position of the roll bar (2).

6. Device according to claim 5, **characterized in that** the central retaining and activating device (12) comprises an engaging element that is fixedly mounted on the cross bar (13, 13') and that is controlled by the actuator (18) and is in mesh with the roll bar (2) in the non-operational position of the latter.

7. Device according to any one of claims 1 to 6, **characterized in that** a spring drive mechanism is provided as the drive in order to transfer the roll bar out of the non-operational position into the raised supporting position, whereby said spring drive mechanism comprises at least one compression spring that acts on one limb of the roll bar and is compressed in the non-operational position of the roll bar.

8. Device according to any one of claims 3 to 6, **characterized in that** a drive element (23) acting on the synchronization shaft (20) is provided as a drive in order to transfer the roll bar (2) out of the non-operational position into the raised supporting position.

9. Device according to claim 8, **characterized in that** the drive element is a spring (23) that is torsionally biased in the non-operational position of the roll bar (2) between the synchronization shaft (20) and a fixed point (24) and sets the synchronization shaft (20) in rotation when the roll bar (2) is released.

10. Device according to any one of claims 4 to 9, **characterized in that** the cross bar (13, 13') is arranged between fixedly held guiding devices (6; 7) of the limbs (4A, 4B) of the roll bar (2).

11. Device according to any one of claims 4 to 10, **characterized in that** the cross bar (13, 13'), the guiding devices (6, 7, 8) connected to the former, and the roll bar (2) form a pre-mountable module.

12. Device according to claim 11, **characterized in that** the pre-mountable module comprises a torsion profile (15) that extends in the vehicle transverse direction above the loading opening (11) in the installation position and can be connected tightly to the vehicle body whereby the roll bar (2) is inserted through said torsion profile in the pre-assembled state.

## Revendications

1. Dispositif de protection au retournement pour un véhicule automobile, en particulier pour un cabriolet, comportant un arceau de sécurité (2), dont la forme est au moins proche de celle d'un U présentant un cadre transversal (3) et des branches latérales (4A, 4B), ménageant une ouverture traversante de chargement (11) et qui est conformé pour s'étendre sensiblement sur toute la largeur du véhicule, dans lequel les branches latérales (4A, 4B) peuvent être déplacées pour le guidage de l'arceau de sécurité (2) d'une position de repos abaissée dans une position relevée de soutien le long de dispositifs de guidage fixes (6, 7, 8), et comportant un dispositif de déploiement et de maintien (12) commandé par un actionneur (18) pour l'arceau de sécurité (2), **caractérisé en ce que** l'on prévoit un dispositif (17) relié aux deux branches (4A,4B) de l'arceau de sécurité (2) durant leur mouvement de déplacement, et synchronisant le mouvement de déplacement des branches (4a,4B) le long des dispositifs de guidage (6, 7, 8).

2. Dispositif selon la revendication 1, **caractérisé en ce que** le cadre transversal (3) et les branches (4A, 4B) de l'arceau de sécurité (2) sont réalisés d'une seule pièce.

3. Dispositif selon la revendication 1 ou 2, **caractérisé en ce que** le dispositif de synchronisation (17) comporte un arbre de synchronisation (20), monté fixe et parallèle au cadre transversal (3) et relié aux branches (4A, 4B) à chaque fois par un profil cranté (21), qui est engagé dans une barre crantée (22) que présente la branche (4A, 4B) qui lui est associée.

4. Dispositif selon l'une des revendications 1 à 3, **caractérisé en ce que** le dispositif de déploiement et de maintien central (12) est disposé dans une traverse de renforcement (13, 13'), qui s'étend sensiblement parallèle au cadre transversal (3) de l'arceau de sécurité (2) dans une position de montage au-dessus de l'ouverture traversante de chargement (11).

5. Dispositif selon l'une des revendications 1 à 4, **caractérisé en ce que** le dispositif de déploiement et de maintien central (12) comprend une patte de fixation (19) disposée sur l'arceau de sécurité (2), dans une zone au moins relativement proche du milieu de la largeur du véhicule et qui, dans la position de repos de l'arceau de sécurité (2), est engagée dans un élément d'engagement monté fixe.

6. Dispositif selon la revendication 5, **caractérisé en ce que** le dispositif de déploiement et de maintien central (12) comprend un élément d'engagement monté fixe sur la traverse de renforcement (13, 13'), qui est commandé par l'actionneur (18) et qui, dans la position de repos de l'arceau de sécurité (2), est engagé dans ce dernier.

7. Dispositif selon l'une des revendications 1 à 6, **caractérisé en ce que**, pour l'entraînement en guidage de l'arceau de sécurité de la position de repos dans la position relevée de soutien, on prévoit un entraînement par un ressort avec à chaque fois au moins un ressort de compression agissant sur une branche de l'arceau de sécurité, comprimé en position de repos de celle-ci.

8. Dispositif selon l'une des revendications 3 à 6, **caractérisé en ce que**, pour l'entraînement en guidage de l'arceau de sécurité (2) de la position de repos à la position relevée de soutien, un élément d'entraînement (23) agissant sur l'arbre de synchronisation (20) est prévu.

9. Dispositif selon la revendication 8, **caractérisé en ce que** l'élément d'entraînement est un ressort (23), qui dans la position de repos de l'arceau de sécurité (2) est précontraint comprimé entre l'arbre de synchronisation (20) et un point fixe (24) et déplace l'arbre de synchronisation (20) en rotation lors d'une libération de l'arceau de sécurité (2).

10. Dispositif selon l'une des revendications 4 à 9, **caractérisé en ce que** la traverse de renforcement (13, 13') est disposée entre des dispositifs de guidage (6, 7) des branches (4A, 4B) de l'arceau de sécurité (2) maintenus fixes.

11. Dispositif selon l'une des revendications 4 à 10, **caractérisé en ce que** la traverse de renforcement (13, 13'), les dispositifs de guidage (6, 7, 8) qui y sont reliés et l'arceau de sécurité se présentent sous la forme d'un module pré-assemblé.

12. Dispositif selon la revendication 11, **caractérisé en ce que** le module pré-assemblé comprend un profil de torsion (15) à solidariser à la carrosserie du véhicule, s'étendant dans une position de montage au-dessus de l'ouverture traversante de chargement (11) dans une direction transversale au véhicule, au moyen duquel l'arceau de sécurité (2) est emboîté à l'état pré-assemblé.
